# EUROPEAN PATENT SPECIFICATION

(11) **EP 1 891 278 B1**
(45) Date of publication and mention of the grant of the patent: **19.08.2015**
(21) Application number: 06745075.9
(22) Date of filing: 13.06.2006
(51) Int. Cl.: E04B 1/80

(54) **AN INSULATING PANEL**
ISOLIERPLATTE
PANNEAU ISOLANT

(30) Priority: 13.06.2005 IE 20050396
(43) Date of publication of application: 27.02.2008
(73) Proprietor: Kingspan Research and Developments Limited, Kingscourt, County Cavan (IE)
(72) Inventor: CAROLAN, James, Kingscourt, County Cavan (IE); FLYNN, Gregory, Collon, County Louth (IE)
(74) Representative: Lane, Cathal Michael
(86) International application number: PCT/IE2006/000065
(87) International publication number: WO 2006/134581

(56) References cited:
- EP-A- 1 045 079
- US-A- 4 529 638
- US-A- 5 527 411
- US-A- 5 875 599

## Description

### Introduction

The invention relates to an insulating body and in particular to an insulating panel of the type comprising a body of insulating foam material.

EP-A-1045079 describes an insulating panel having the features of the preamble of claim 1.

There is an increasing need to provide insulating panels with improved thermal performance in a cost efficient manner.

This invention is directed towards providing such an improved insulating panel.

### Statements of Invention

According to the invention there is provided an insulating panel comprising-
an external facing;
an internal facing;
a body of expanded insulating foam extending between the facings;
a plurality of vacuum insulated panels embedded in the expanded insulating foam, the vacuum insulated panels extending across the length and/or with of said insulating panel and being interconnected by a webbing or other interconnection to assist in their storing and their automatic handling.

In one embodiment the vacuum insulated panels extend longitudinally substantially the length of the insulated panel.

In one embodiment the vacuum insulated panels extend laterally substantially the width of the insulating panel.

The vacuum insulated panels may extend for at least 25%, at least 50%, at least 65% of the thickness of the insulating foam.

The inner facing may be of metal sheet.

The outer facing may be of metal sheet.

The outer and/or inner sheets may be profiled.

The invention also provides a method for manufacturing an insulating panel according to claim 1 comprising the steps of:
leading a first substrate to a foam lay down station;
laying liquid foam reactants onto the first substrate;
applying a second substrate over the liquid foam reactants;
allowing the foam to expand to form an insulating body;
said first and second substrates forming said external and internal facings;
wherein the method comprises the steps of
providing a plurality of interconnected vacuum insulating panels, applying a first lay down onto the first substrate and inserting the connected vacuum panels onto the first lay down in advance of lay down of liquid foam reactants.

The first lay down may comprise a bonding material which is compatible with the liquid foam reactants. The first lay down may comprise liquid foam reactants.

In one embodiment the method comprises the interconnected vacuum panels are inserted substantially continuously onto the first lay-down.

In one embodiment the vacuum panels are in a stack or are on a reel and the method comprises leading the vacuum panels from the stack or reel for insertion.

The first substrate may be of metal sheet, especially of profiled metal sheet. The second substrate may be of metal sheet.

### Brief Description of the Drawings

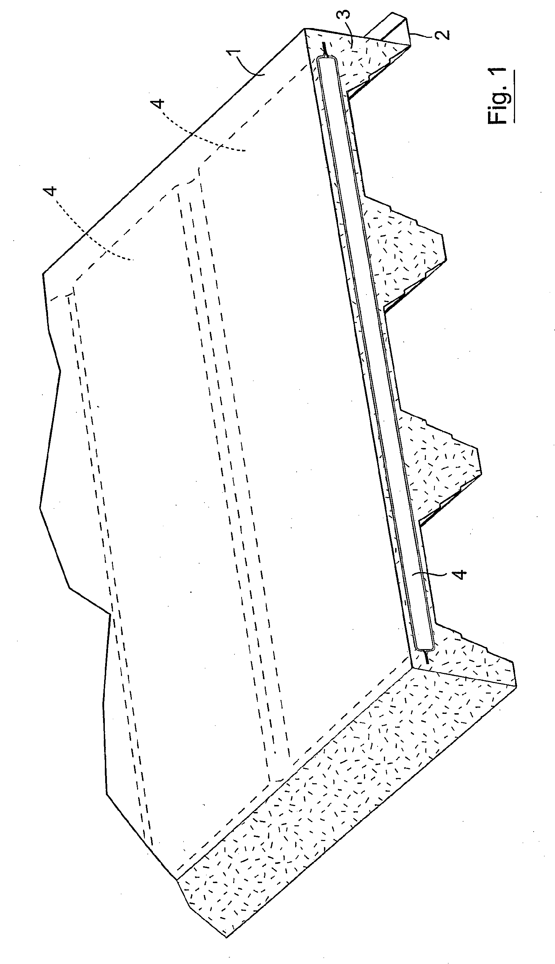

The invention will be more clearly understood from the following description thereof given by way of example only, with reference to the accompanying drawings in which:-
Fig. 1 is a perspective, partially cross sectional view of an insulating panel according to the invention;
Fig. 1 is a perspective, partially cross sectional view of an insulating panel according to an embodiment of the invention;

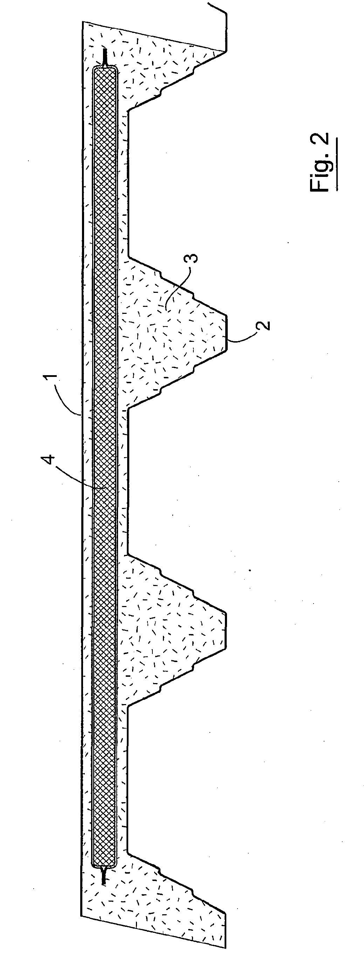

Fig. 2 is a cross sectional view of the panel of Fig 1;

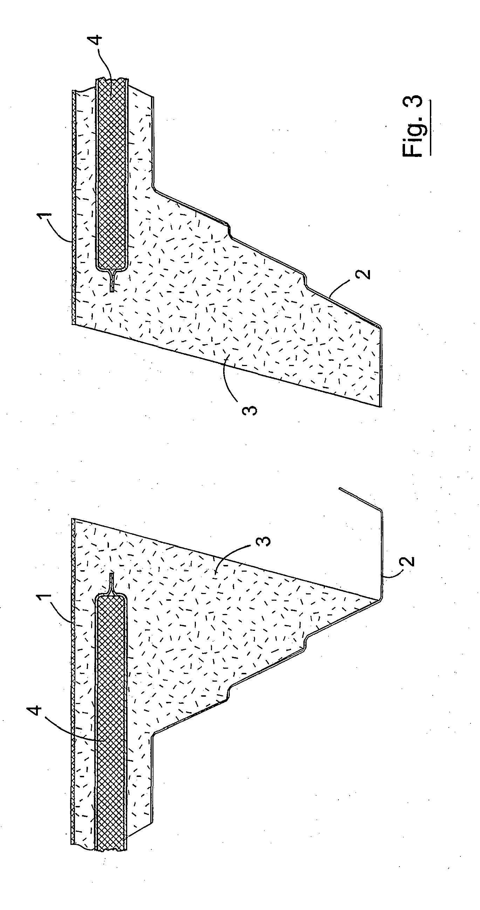

Fig. 3 is a cross sectional view of portions of two adjacent insulating panels of an embodiment of the invention;
Fig. 4(a) is a cross sectional view of an insulating panel which is not part of the invention.
Figs. 4(b) to 4(c) are cross sectional views illustrating portions of insulating panels of an embodiment of the invention;
Figs. 5(a) to 5(g) are diagrams illustrating the manufacture of a panel of an embodiment of the invention;
Fig 6 is a cross sectional view of roof panel according to an embodiment of the invention;
Fig. 7 is a cross sectional view of a wall panel according to an embodiment of the invention.
Fig. 8 is a cross sectional view of a joint between two adjacent wall panels of an embodiment of the invention; and
Fig. 9 is a cross sectional view of another roof panel according to an embodiment of the invention.

### Detailed Description

Referring to the drawings and initially to Fig. 1 thereof there is illustrated an insulating panel according to an embodiment of the invention which comprises an outer facing comprising an external sheet 1, an internal facing comprising a sheet or backing tray 2 with a body of insulating foam material 3 therebetween. The insulating foam may be, for example, of polyisocyanurate.

The insulating foam 3 has a number of vacuum insulated panels 4 embedded therein. The vacuum insulated panels are of the type available from NanoPore Inc. of Albuquerque, New Mexico. These vacuum insulated panels comprise silica, titania and/or carbon in a three dimensional highly branched network of primary particles of 2 to 20 nanometers in size which aggregate into large particles on the nano or micrometer scale. The pore size is from 10 to 100nm. The powder is pressed into boards which are cut to size and typically shrink wrapped before being encased in a metallised barrier film and sealed under vacuum.

In the invention we embed such vacuum insulation panels during manufacture of the insulating panels of the invention to provide an, enhanced thermal performance. The overall thickness of the panel to achieve desired insulation properties is reduced. The vacuum insulated panels may extend for at least 25%, at least 50% and possibly at least 65% of the thickness of the insulating foam.

We have found that in composite panels a vacuum insulation panel having a thickness of 10mm can provide similar insulation properties as a 50 mm thick section of polyisocyanurate foam. Thus in composite panels substantial savings on panel thickness can be achieved with follow-on benefits of reduced transport, and lower panel weight with consequential reduction in costs of support structures. Because of reduced support structures and panel size the structure will likely have a reduced footprint.

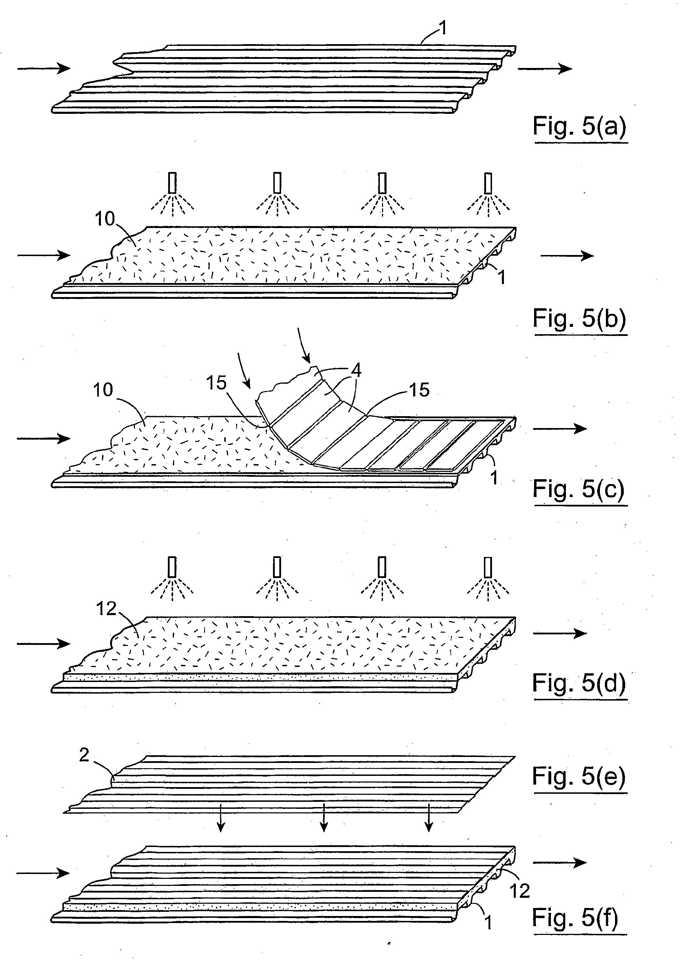

Referring to Figs. 5(a) to 5(f) the panels of an embodiment of the invention are manufactured by conveying an external profiled sheet I along a flat bed with the outer surface of the sheet 1 lowermost. A pre-laydown 10 may be applied to the uppermost surface of the sheet 1. The vacuum panels 4 are then laid down on the pre-laydown 10 material which assists in holding them in a desired position. Liquid foam reactants 12 are then applied over the vacuum panels 4 and the sheet 2 is then led continuously over the liquid foam reactants to form an assembly. The assembly is then heated in an oven to allow the liquid foam reactants to expand to form an insulated core 3 with the vacuum panel(s) 4 embedded therein between the sheets 1,2.

The pre-laydown may comprise liquid foam reactants and/or may comprise a compatible adhesive.

The vacuum panels 4 may be inserted manually prior to lay-down of liquid foam reactants or are preferably inserted automatically, for example as illustrated in Fig 5(c) the vacuum panels may be provided on a reel or stack from which the vacuum panels are led.

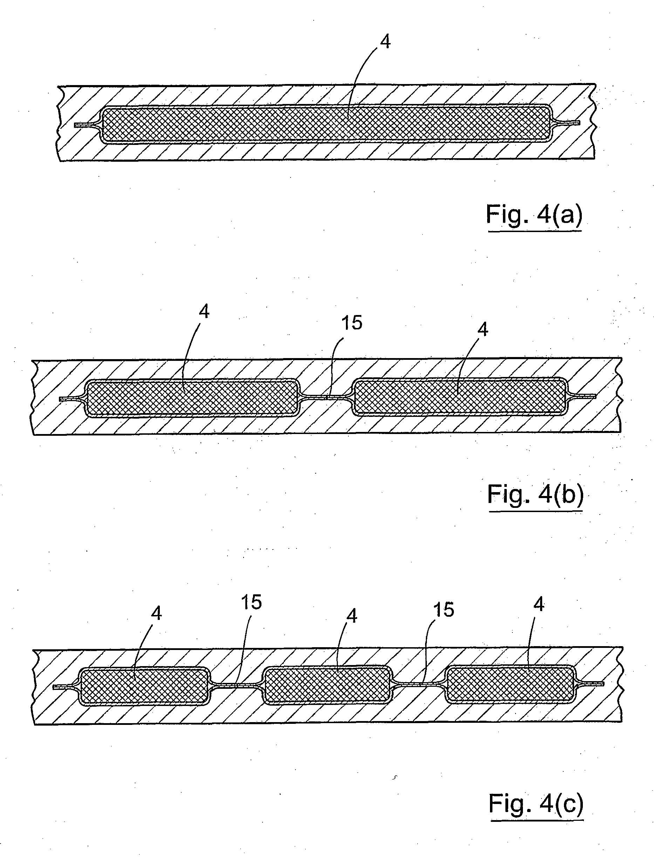

As illustrated in Figs. 4(b) to 4(c) the insulating panel of the invention comprises a plurality of such vacuum panels 4 across the length and/or width and the vacuum panels are interconnected by a suitable webbing 15 or other interconnection to assist in storing and automatic handling of the vacuum panels 4. Figs. 4(a) to 4(c) illustrate typical cross sections of various panels according to the invention with alternative arrangements of vacuum panels embedded therein. There may be two or several vacuum panels spaced-apart along or across the insulating panels of the invention.

The insulated panel 1 illustrated in Fig. 1 is a typical panel with a profile sheet 1 which may be uppermost or lowermost when the panel is in situ.

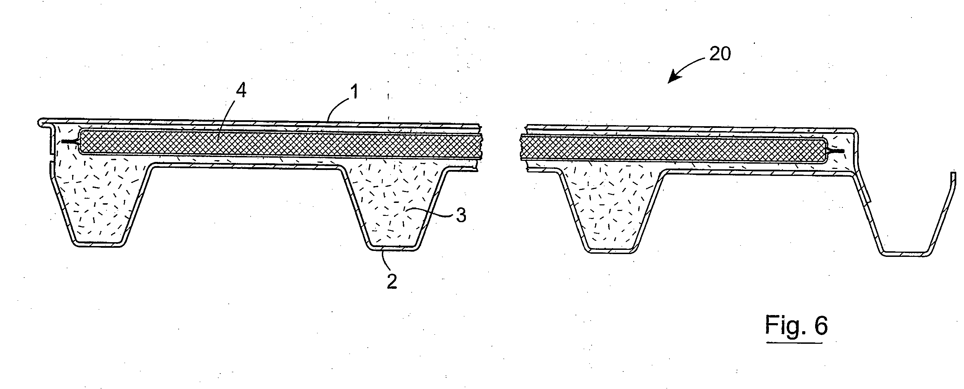

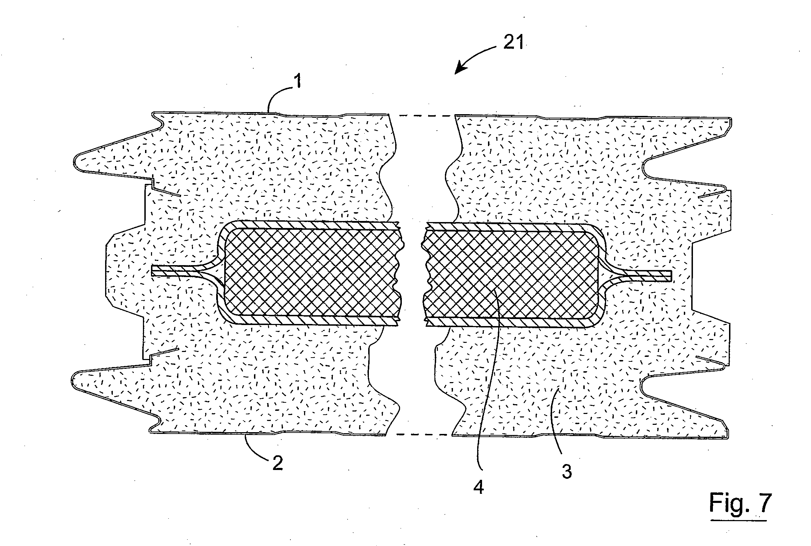

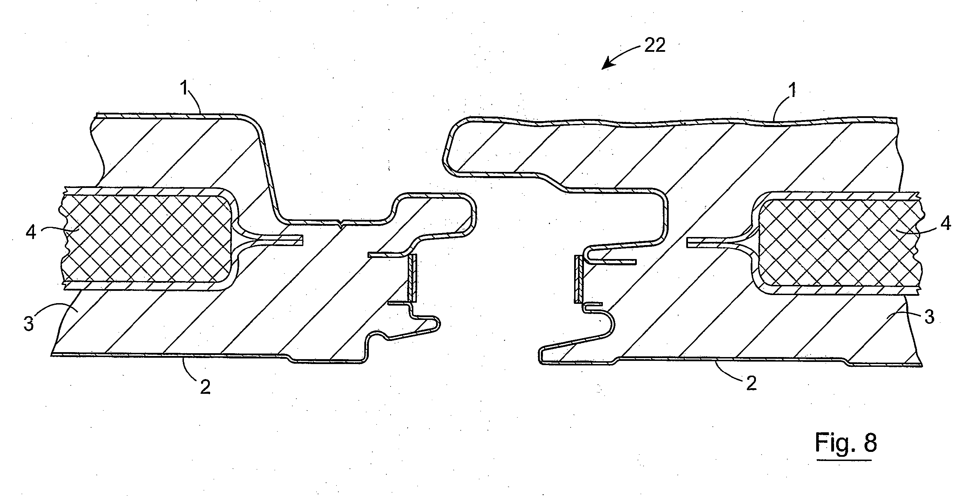

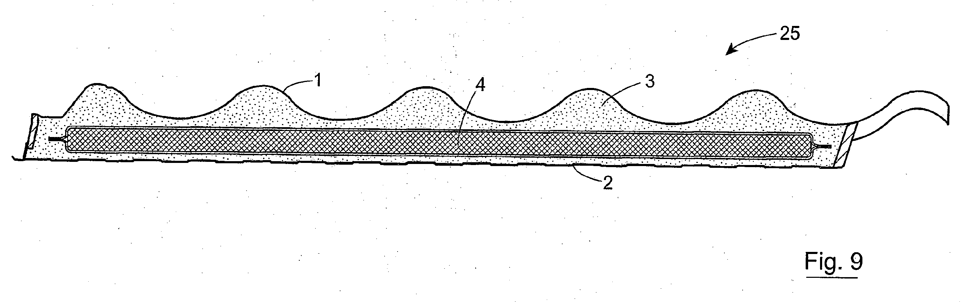

The invention may be applied to any suitable composite insulating panels, such as the typical roof panels 20 illustrated in Fig. 6 or to wall panels 21, 22 respectively illustrated in Figs. 7 and 8 which have profiled joint forming details along the side edges thereof. Many other variations are possible. For example, the panel may be a roof panel 25 with a tile profile as illustrated in Fig. 9.

The invention is not limited to the embodiments hereinbefore described which may be varied in detail.

## Claims

1. An insulating panel comprising:
an external facing (1);
an internal facing (2);
a body of expanded insulating foam (3) extending between the facings (1, 2);
a plurality of vacuum insulated panels (4) embedded in the expanded insulating foam (3), the vacuum insulated panels (4) extending across the length and/or width of said insulating panel; the insulating panel being **characterized in that** the vacuum insulated panels (4) are interconnected by a webbing (15) or other interconnection to assist in their storing and their automatic handling.

2. An insulating panel as claimed in claim 1 wherein the vacuum insulated panels (4) extend longitudinally substantially the length of the insulated panel.

3. An insulating panel as claimed in any of claims 1 or 2 wherein the vacuum insulated panels (4) extend laterally substantially the width of the insulating panel.

4. An insulating panel as claimed in any of claims 1 to 3 wherein the vacuum insulated panels (4) extend for at least 25% of the thickness of the insulating foam (3).

5. An insulating panel as claimed in any of claims 1 to 3 wherein the vacuum insulated panels (4) extend for at least 50% of the thickness of the insulating foam (3).

6. An insulating panel as claimed in any of claims 1 to 3 wherein the vacuum insulated panels (4) extend for at least 65% of the thickness of the insulating foam (3).

7. An insulating panel as claimed in any of claims 1 to 6 wherein the internal facing (2) is of metal sheet.

8. An insulating panel as clamed in any of claims 1 to 7 wherein the external facing (1) is of metal sheet.

9. An insulating panel as claimed in claim 7 or 8 wherein the internal and/or external facing (1, 2) is profiled.

10. A method for manufacturing an insulating panel according to any of the preceding claims comprising the steps of
leading a first substrate (1) to a foam lay down station;
laying liquid foam reactants onto the first substrate (1);
applying a second substrate (2) over the liquid foam reactants; allowing the foam to expand to form an insulating body (3);
said first and second substrates (1,2) forming said external and internal facings (1,2);
wherein the method comprises the steps of
providing a plurality of interconnected vacuum insulating panels (4), applying a first lay down (10) into the first substrate (1); and
inserting the connected vacuum panels (4) onto the first lay down (10) in advance of lay down of liquid foam reactants.

11. A method as claimed in claim 10 wherein the first lay down (10) comprises a bonding material which is compatible with the liquid foam reactants.

12. A method as claimed in claim 10 or 11 wherein the first lay down (10) comprises liquid foam reactants.

13. A method as claimed in any of claims 10 to 12 wherein the interconnected vacuum panels (4) are inserted substantially continuously onto the first lay-down (10).

14. A method as claimed in claim 13 wherein the vacuum panels, (4) are in a stack or are on a reel and the method comprises leading the vacuum panels (4) from the stack or reel for insertion.

15. A method as claimed in any of claims 10 to 13 wherein the vacuum insulating panels (4) are interconnected by a webbing (15).

16. A method as claimed in any of claims 10 to 15 wherein the first substrate (1) is of metal sheet.

17. A method as claimed in claim 16 wherein the first substrate (1) is of profiled metal sheet.

18. A method as claimed in any of claims 10 to 17 wherein the second substrate (2) is of metal sheet.

## Patentansprüche

1. Ein Isolationspaneel bzw. Isolationselement, das Folgendes aufweist:
eine äußere Oberfläche (1);
eine innere Oberfläche (2);
einen Körper aus aufgeschäumtem Isolationsschaum (3), der sich zwischen den Oberflächen (1, 2) erstreckt;
eine Vielzahl von vakuumisolierten Paneelen bzw. Elementen (4), die in den aufgeschäumten Isolationsschaum (3) eingebettet sind, wobei sich die vakuumisolierten Elemente (4) über die Länge und/oder die Breite des Isolationselements hinweg erstrecken; wobei das Isolationselement **dadurch gekennzeichnet ist, dass** die vakuumisolierten Elemente (4) durch ein Gewebe (15) oder eine andere Zwischenverbindung miteinander verbunden sind, um ihre Lagerung und ihre automatische Verarbeitung zu unterstützen.

2. Isolationselement nach Anspruch 1, wobei sich die vakuumisolierten Elemente (4) in Längsrichtung im Wesentlichen entlang der Länge des Isolationselements erstrecken.

3. Isolationselement nach einem der Ansprüche 1 oder 2, wobei sich die vakuumisolierten Elemente (4) lateral bzw. quer im Wesentlichen entlang der Breite des Isolationselements erstrecken.

4. Isolationselement nach einem der Ansprüche 1 bis 3, wobei sich die vakuumisolierten Elemente (4) über wenigstens 25% der Dicke des Isolationsschaumes (3) erstrecken.

5. Isolationselement nach einem der Ansprüche 1 bis 3, wobei sich die vakuumisolierten Elemente (4) über wenigstens 50% der Dicke des Isolationsschaumes (3) erstrecken.

6. Isolationselement nach einem der Ansprüche 1 bis 3, wobei sich die vakuumisolierten Elemente (4) über wenigstens 65% der Dicke des Isolationsschaumes (3) erstrecken.

7. Isolationselement nach einem der Ansprüche 1 bis 6, wobei die innere Oberfläche (2) aus Metallblech ist.

8. Isolationselement nach einem der Ansprüche 1 bis 7, wobei die äußere Oberfläche (1) aus Metallblech ist.

9. Isolationselement nach Anspruch 7 oder 8, wobei die innere und/oder äußere Oberfläche (1, 2) mit Profil versehen ist.

10. Ein Verfahren zum Herstellen eines Isolationselements gemäß irgendeinem der vorhergehenden Ansprüche, das die folgenden Schritte aufweist:
Führen eines ersten Substrates (1) zu einer Schaumauflagestation;
Ablagern bzw. Auflegen flüssiger Schaumreaktionsmittel auf das erste Substrat (1);
Aufbringen eines zweiten Substrats (2) über die flüssigen Schaumreaktionsmittel;
Gestatten, dass sich der Schaum aufschäumt, um einen Isolationskörper (3) zu bilden; wobei die ersten und zweiten Substrate (1, 2) die äußeren und inneren Oberflächen (1, 2) bilden;
wobei das Verfahren die folgenden Schritte aufweist:
Vorsehen einer Vielzahl von miteinander verbundenen vakuumisolierten Paneelen bzw. Elementen (4),
Aufbringen einer ersten Auflage (10) auf das erste Substrat (1); und
Einlegen der verbundenen vakuumisolierten Elemente (4) auf die erste Auflage (10) vor dem Ablagern bzw. Auflegen flüssiger Schaumreaktionsmittel.

11. Verfahren nach Anspruch 10, wobei die erste Auflage (10) ein Verbindungs-bzw. Klebematerial aufweist, das mit den flüssigen Schaumreaktionsmitteln kompatibel ist.

12. Verfahren nach Anspruch 10 oder 11, wobei die erste Auflage flüssige Schaumreaktionsmittel aufweist.

13. Verfahren nach einem der Ansprüche 10 bis 12, wobei die miteinander verbundenen Vakuumelemente (4) im Wesentlichen kontinuierlich auf die erste Auflage (10) eingefügt bzw. eingelegt werden.

14. Verfahren nach Anspruch 13, wobei die Vakuumelemente (4) in einem Stapel oder auf einer Rolle vorliegen und wobei das Verfahren das Zuführen der Vakuumelemente (4) von dem Stapel oder der Rolle zum Einlegen aufweist.

15. Verfahren nach einem der Ansprüche 10 bis 13 wobei die Vakuumisolationselemente (4) durch ein Gewebe (15) miteinander verbunden sind.

16. Verfahren nach einem der Ansprüche 10 bis 15, wobei das erste Substrat (1) aus Metallblech ist.

17. Verfahren nach Anspruch 16, wobei das erste Substrat (1) aus mit Profil versehenem Metallblech ist.

18. Verfahren nach einem der Ansprüche 10 bis 17, wobei das zweite Substrat (2) aus Metallblech ist.

## Revendications

1. Panneau isolant comprenant :
une face externe (1) ;
une face interne (2) ;
un corps de mousse isolante expansée (3) s'étendant entre les faces (1, 2) ;
une pluralité de panneaux isolés par du vide (4) logés dans la mousse isolante expansée (3), les panneaux isolés par du vide (4) s'étendant sur la longueur et/ou la largeur du panneau isolant ; le panneau isolant étant **caractérisé en ce que** les panneaux isolés par du vide (4) sont interconnectés par un assemblage (15) ou autre interconnexion pour aider à leur stockage et à leur manipulation automatique.

2. Panneau isolant selon la revendication 1, dans lequel les panneaux isolés par du vide (4) s'étendent longitudinalement sensiblement sur la longueur du panneau isolant.

3. Panneau isolant selon la revendication 1 ou 2, dans lequel les panneaux isolés par du vide (4) s'étendent latéralement sensiblement sur la largeur du panneau isolant.

4. Panneau isolant selon l'une quelconque des revendications 1 à 3, dans lequel les panneaux isolés par du vide (4) s'étendent sur au moins 25 % de l'épaisseur de la mousse isolante (3).

5. Panneau isolant selon l'une quelconque des revendications 1 à 3, dans lequel les panneaux isolés par du vide (4) s'étendent sur au moins 50 % de l'épaisseur de la mousse isolante (3).

6. Panneau isolant selon l'une quelconque des revendications 1 à 3, dans lequel les panneaux isolés par du vide (4) s'étendent sur au moins 65 % de l'épaisseur de la mousse isolante (3).

7. Panneau isolant selon l'une quelconque des revendications 1 à 6, dans lequel la face interne (2) est une feuille métallique.

8. Panneau isolant selon l'une quelconque des revendications 1 à 7, dans lequel la face externe (1) est une feuille métallique.

9. Panneau isolant selon la revendication 7 ou 8, dans lequel la face interne et/ou externe (1, 2) est profilée.

10. Procédé de fabrication d'un panneau isolant selon l'une quelconque des revendications précédentes, comprenant les étapes suivantes :
acheminer un premier substrat (1) vers une poste de dépôt de mousse ;
déposer des réactifs de mousse liquide sur le premier substrat (1) ;
appliquer un second substrat (2) sur les réactifs de mousse liquide ;
permettre à la mousse de s'expanser pour former un corps isolant (3) ; les premier et second substrats (1, 2) formant les faces externe et interne (1, 2) ;
dans lequel le procédé comprend les étapes suivantes :
prévoir une pluralité de panneaux isolants sous vide interconnectés (4), en appliquant un premier dépôt (10) sur le premier substrat (1) ; et
insérer les panneaux sous vide connectés (4) sur le premier dépôt (10) avant le dépôt de réactif de mousse liquide.

11. Procédé selon la revendication 10, dans lequel le premier dépôt (10) comprend un matériau de liaison qui est compatible avec les réactifs de mousse liquide.

12. Procédé selon la revendication 10 à 11, dans lequel le premier dépôt (10) comprend des réactifs de mousse liquide.

13. Procédé selon l'une quelconque des revendications 10 à 12, dans lequel les panneaux sous vide interconnectés (4) sont insérés de façon sensiblement continue sur le premier dépôt (10) .

14. Procédé selon la revendication 13, dans lequel les panneaux sous vide (4) sont en pile ou sont sur un rouleau et dans lequel le procédé comprend l'acheminement des panneaux sous vide (4) à partir de la pile ou du rouleau pour insertion.

15. Procédé selon l'une quelconque des revendications 10 à 13, dans lequel les panneaux isolés par du vide (4) sont interconnectés par un assemblage (15).

16. Procédé selon l'une quelconque des revendications 10 à 15, dans lequel le premier substrat (1) est une feuille métallique.

17. Procédé selon la revendication 16, dans lequel le premier substrat (1) est une feuille métallique profilée.

18. Procédé selon l'une quelconque des revendications 10 à 17, dans lequel le second substrat (2) est une feuille métallique.
